# EUROPEAN PATENT APPLICATION

(11) **EP 1 489 281 A2**
(43) Date of publication of application: **22.12.2004**
(21) Application number: 04253603.7
(22) Date of filing: 16.06.2004
(51) Int. Cl.: F02B 47/08, F02M 25/07, C10M 133/58, C10M 135/22, C10M 135/28

(54) **Use in exhaust gas recirculation engines of an additive combining dispersion and viscosity index improving properties**

(30) Priority: 18.06.2003 US 464614
(71) Applicant: ETHYL CORPORATION, Richmond, Virginia 23219-4304 (US)
(72) Inventor: Mishra, Munmaya K., Richmond Virginia 23233 (US); Venhaus, David A., Glen Allen Virginia 23059 (US); Passut, Charles A., Midlothian Virginia 23113 (US)
(74) Representative: Cresswell, Thomas Anthony

(57) **Abstract**

The use in a cooled exhaust gas recirculation (EGR) engine of an olefin copolymer dispersant viscosity index improver to reduce or eliminate oil thickening and sludge formation is provided. Also provided are lubricated cooled EGR engines with ability to pass rigorous oil viscosity and emission standards.

## Description

### FIELD

The present invention in an embodiment relates to a cooled exhaust gas recirculation (also called recycle) engine lubricated with a lubricating oil comprising a dispersant viscosity index improver in an amount and of a type sufficient to thereby achieve acceptable reduction in oil thickening due to increased soot accumulation.

### BACKGROUND

With the arrival of new exhaust gas recirculation or recycle (hereinafter "EGR") cooled engines including cooled EGR engines, a problem has developed in the ability of the conventional lubricating oils to handle the resulting increased soot loading. These new engines also have more stringent NOx emission standards. It has been noted in field testing of certain Mack and Detroit Diesel trucks that the engine oils tested in the cooled EGR prototype engines exhibit undesirably excessive oil thickening because of the way soot is being generated. Increasing the treat rate of the standard dispersants in the lubricating oils has not solved the problem.

The art contains many disclosures on the use of polymer additives in lubricating oil compositions. Ethylene-propylene and/or other olefin copolymers and ethylene-alpha olefin non-conjugated diene terpolymers, which have been further derivatized to provide functional properties in lubricating oil compositions, illustrate this type of oil additive.

Therefore, what is needed is an olefin copolymer dispersant viscosity index improver for use in lubricating oils in a cooled EGR engine to thereby achieve acceptable reduction in oil thickening due to soot accumulation. Also desired is a cooled EGR engine lubricated with a lubricating oil containing such a dispersant viscosity index improver ("VII").

### SUMMARY OF EMBODIMENTS

It has been surprisingly discovered that the use in cooled EGR engines of lubricating oils containing certain olefin copolymer ("OCP") dispersant VIIs can reduce, prevent or minimise the undesirable oil thickening that can occur in the cooled EGR engines. By "copolymer" herein is meant and included copolymers or terpolymers of ethylene and C₃ to C₂₃ alpha-olefin, and optionally a non-conjugated diene or triene, on which has been grafted ethylenically unsaturated carboxylic reactants.

The cooled EGR engines within the scope of the present invention include automotive engines, heavy and light duty diesel and gasoline truck engines, gasoline combustion engines, diesel engines, hybrid Internal Combustion/electric engines. These can include EGR engines cooled by the circulation or heat exchange of water, water/hydrocarbon blends or mixtures, water/glycol mixtures, and/or air or gas.

Many patents have taught the manufacture and use of dispersant VII materials in engine oil formulations. These patents include, for example, U.S. Patents 6,107,257; 5,182041; 5,188,745; 5,238,588, 4,8636,623; 5,075,383; 6,107,258; 5,556,923; and European patents EP 0922752; EP 0909805; EP 0491456; EP 0510892; EP 0338672EP 0396297; EP0549196; and EP 0417904, all of which are incorporated herein by reference in their entirety for their teaching.

Therefore, in an embodiment is provided herein a lubricated engine comprising an exhaust gas recirculation system, whereby exhaust gases comprising soot generated in the combustion in the engine of fuel contact a lubricating oil used to lubricate said engine, wherein said lubricating oil comprises: a base oil, and at least one dispersant viscosity index improver in an amount and type sufficient to reduce the amount of oil thickening of the lubricating oil. In this manner, a lubricating oil produces a passing result in the Mack T-11 EGR equipped diesel engine test by maintaining a kinematic viscosity of about 20.0 or less, even at soot levels of up to about 8.9 % by mass.

It is to be understood that both the foregoing general description and the following detailed description are exemplary and explanatory only and are intended to provide further explanation of the present invention, as claimed.

### DETAILED DESCRIPTION OF THE EMBODIMENTS

In an embodiment is presented herein an EGR engine lubricated with a lubricating oil that contains, *inter alia*, a viscosity-controlling amount of a highly grafted, multi-functional olefin copolymer that comprises the reaction product of (1) an acylated olefin copolymer, wherein the acylated copolymer comprises copolymers or terpolymers of ethylene and C₃ to C₂₃ alpha-olefin and optionally a non-conjugated diene or triene on which has been grafted ethylenically unsaturated carboxylic reactants to a level of 0.15 to 1.0 carboxylic groups per 1000 number average molecular weight units (Mn), and (2) a polyamine compound selected from the group consisting of:
(a) an N-arylphenylenediamine represented by the formula: 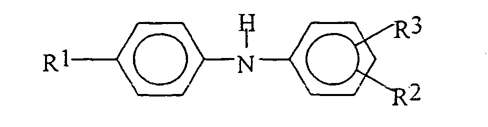 in which R¹ is hydrogen, -NH-aryl, -NH-arylalkyl, -NH-alkyl, or a branched or straight chain radical having from 4 to 24 carbon atoms that can be alkyl, alkenyl, alkoxyl, aralkyl, alkaryl, hydroxyalkyl or aminoalkyl; R² is -NN₂, CH₂-(CH₂)ₙ-NH₂, CH₂-aryl-NH₂, in which n has a value from 1 to 10; and R³ is hydrogen, alkyl, alkenyl, alkoxyl, aralkyl, alkaryl having from 4 to 24 carbon atoms;
(b) an aminothiazole from the group consisting of aminothiazole, aminobenzothiazole, aminobenzo-thiadiazole and aminoalkylthiazole;
(c) an aminocarbazole represented by the formula: 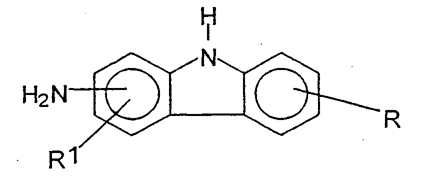 in which R and R¹ represent hydrogen or an alkyl, alkenyl or alkoxyl radical having from 1 to 14 carbon atoms; (d) an aminoindole represented by the formula: 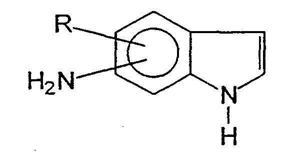 in which R represents hydrogen or an alkyl radical having from 1 to 14 carbon atoms;
(e) an aminopyrrole represented by the formula: 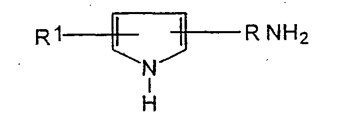 in which R is a divalent alkylene radical having 2-6 carbon atoms and R¹ is hydrogen or an alkyl radical having from 1 to 14 carbon atoms;
(f) an amino-indazolinone represented by the formula: 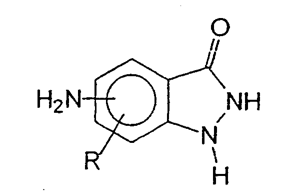 in which R is hydrogen or an alkyl radical having from 1 to 14 carbon atoms;
(g) an aminomercaptotriazole represented by the formula: 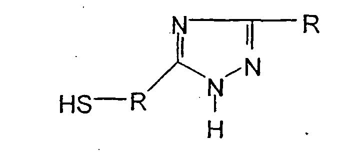 in which R can be absent or is a C₁-C₁₀ linear or branched hydrocarbon selected from the group consisting of alkyl, alkenyl, arylalkyl, or aryl;
(h) and an aminoperimidine represented by the formula, 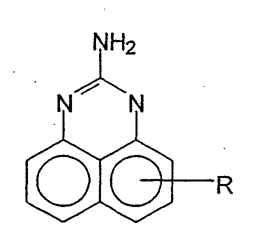 in which R represents hydrogen or an alkyl or alkoxy radical having from 1 to 14 carbon atoms;
(i) aminoalkyl imidazoles, such as 1-(2-aminoethyl) imidazole, 1-(3-aminopropyl) imidazole; and
(j) aminoalkyl morpholines, such as 4-(3-aminopropyl) morpholine.

The novel lubricated cooled EGR engines described herein contain lubricating compositions that comprise an oil of lubricating viscosity and a dispersant VII effective amount of the highly grafted, multi-functional olefin copolymer dispersant as described above.

In an embodiment, polymers for use herein may include copolymers of ethylene and one or more C₃ to C₂₃ alpha-olefins. Copolymers of ethylene and propylene are very effective. Other alpha-olefins suitable in place of propylene to form the copolymer or to be used in combination with ethylene and propylene to form a terpolymer include 1-butene, 1-pentene, 1-hexene, 1-octene and styrene; α,ω-diolefins such as 1,5-hexadiene, 1,6-heptadiene, 1,7-octadiene; branched chain alpha-olefins such as 4-methylbutene-1, 5-methylpentene-1 and 6-methylheptene-1; and mixtures thereof.

More complex polymer substrates, often designated as interpolymers, may be prepared using a third component in preparing the dispersant used in the oil to lubricate the cooled EGR engines. The third component generally used to prepare an interpolymer substrate is a polyene monomer selected from non-conjugated dienes and trienes. The non-conjugated diene component is one having from 5 to 14 carbon atoms in the chain. In one embodiment, the diene monomer is characterized by the presence of a vinyl group in its structure and can include cyclic and bicyclo compounds. Representative dienes include 1, 4-hexadiene, 1,4-cyclohexadiene, dicyclopentadiene, 5-ethylidene-2-norbornene, 5-methylene-2-norborene, 1,5-heptadiene, and 1,6-octadiene. A mixture of more than one diene can be used in the preparation of the interpolymer. In another embodiment, a non-conjugated diene for preparing a terpolymer or interpolymer substrate is 1,4-hexadiene.

The triene component will have at least two non-conjugated double bonds, and up to about 30 carbon atoms in the chain. Typical trienes useful in preparing the interpolymer of the invention are 1-isopropylidene-3α,4,7,7α-tetrahydroindene, 1-isopropylidenedicyclopentadiene, dihydro-isodicyclopentadiene, and 2-(2-methylene-4-methyl-3-pentenyl)[2.2.1] bicyclo-5-heptene.

Ethylene-propylene or higher alpha-olefin copolymers may consist of from about 15 to 80 mole percent ethylene and from about 85 to 20 mole percent C₃ to C₂₃ alpha-olefin with the mole ratios being from about 35 to 75 mole percent ethylene and from about 65 to 25 mole percent of a C₃ to C₂₃ alpha-olefin. In another embodiment, the proportions are from 50 to 70 mole percent ethylene and 50 to 30 mole percent C₃ to C₂₃ alpha-olefin. In yet another example, the proportions are from 55 to 65 mole percent ethylene and 45 to 35 mole percent C₃ to C₂₃ alpha-olefin.

Terpolymer variations of the foregoing polymers may contains from about 0.1 to 10 mole percent of a non-conjugated diene or triene.

Also useful herein as the polymer for the dispersant viscosity index improver used in an oil to lubricate a cooled EGR engine is a polymer selected from the group consisting of polymethacrylates, ethylene/propylene copolymers, polyisoprene or saturated polyisoprene, and polyisoprene/saturated polyisoprene copolymers.

The polymer substrate, that is the ethylene copolymer or terpolymer, can be an oil-soluble, linear or branched polymer having a number average molecular weight from about 20,000 to 150,000 as determined by gel permeation chromatography and universal calibration standardization, with a number average molecular weight range of 30,000 to 110,000.

The terms polymer and copolymer are used generically to encompass ethylene copolymers, terpolymers or interpolymers. These materials may contain minor amounts of other olefinic monomers so long as the basic characteristics of the ethylene copolymers are not materially changed.

The polymerization reaction used to form the ethylene-olefin copolymer substrate is generally carried out in the presence of a conventional Ziegler-Natta or metallocene catalyst system. The polymerization medium is not specific and can include solution, slurry, or gas phase processes, as known to those skilled in the art. When solution polymerization is employed, the solvent may be any suitable inert hydrocarbon solvent that is liquid under reaction conditions for polymerization of alpha-olefins; examples of satisfactory hydrocarbon solvents include straight chain paraffins having from 5 to 8 carbon atoms, with hexane being preferred. Aromatic hydrocarbons, preferably aromatic hydrocarbon having a single benzene nucleus, such as benzene, toluene and the like; and saturated cyclic hydrocarbons having boiling point ranges approximating those of the straight chain paraffinic hydrocarbons and aromatic hydrocarbons described above, are particularly suitable. The solvent selected may be a mixture of one or more of the foregoing hydrocarbons. When slurry polymerization is employed, the liquid phase for polymerization is preferably liquid propylene. It is desirable that the polymerization medium be free of substances that will interfere with the catalyst components.

An ethylenically unsaturated carboxylic acid material is next grafted onto the prescribed polymer backbone to form an acylated ethylene copolymer. These carboxylic reactants which are suitable for grafting onto the ethylene copolymer contain at least one ethylenic bond and at least one, preferably two, carboxylic acid or its anhydride groups or a polar group which is convertible into said carboxyl groups by oxidation or hydrolysis. The carboxylic reactants are in one embodiment selected from the group consisting of acrylic, methacrylic, cinnamic, crotonic, maleic, fumaric and itaconic reactants. Alternatively, the.carboxylic reactants are selected from the group consisting of maleic acid, fumaric acid, maleic anhydride, or a mixture of two or more of these. Maleic anhydride or a derivative thereof has advantages of commercial availability and ease of reaction. In the case of unsaturated ethylene copolymers or terpolymers, itaconic acid or its anhydride are useful due to its reduced tendency to form a cross-linked structure during the free-radical grafting process.

The ethylenically unsaturated carboxylic acid materials typically can provide one or two carboxylic groups per mole of reactant to the grafted polymer. That is, methyl methacrylate can provide one carboxylic group per molecule to the grafted polymer while maleic anhydride can provide two carboxylic groups per molecule to the grafted polymer.

In one embodiment, the carboxylic reactant is grafted onto the prescribed polymer backbone in an amount to provide 0.15 to 1.0 carboxylic groups per 1000 number average molecular weight units of the polymer backbone, preferably 0.3 to 0.5 carboxylic groups per 1000 number average molecular weight. For example, a copolymer substrate with Mn of 20,000 is grafted with 6 to 10 carboxylic groups per polymer chain or 3 to 5 moles of maleic anhydride per mole of polymer. A copolymer with Mn of 100,000 is grafted with 30 to 50 carboxylic groups per polymer chain or 15 to 25 moles of maleic anhydride per polymer chain. The minimum level of functionality is the level needed to achieve the minimum satisfactory dispersancy performance in the lubricated cooled EGR engines.

The grafting reaction to form the acylated olefin copolymers is generally carried out with the aid of a free-radical initiator either in solution or in bulk, as in an extruder or intensive mixing device. When the polymerization is carried out in hexane solution, it is economically convenient but not required herein to carry out the grafting reaction in hexane as described in U.S. Patents 4,340,689, 4,670,515 and 4,948,842, incorporated herein by reference. The resulting polymer intermediate is characterized by having carboxylic acid acylating functionality randomly within its structure.

The highly grafted, multi-functional olefin copolymer dispersant VIIs used to lubricate the cooled EGR engines of the present invention can be incorporated into a lubricating oil in any convenient way. Thus, the highly grafted, multi-functional olefin copolymers can be added directly to the lubricating oil by dispersing or dissolving the same in the lubricating oil at the desired level of concentration. Such blending into the lubricating oil can occur at room temperature or elevated temperatures. Alternatively, the highly grafted, multi-functional olefin copolymers can be blended with a suitable oil-soluble solvent/diluent (such as benzene, xylene, toluene, lubricating base oils and petroleum distillates) to form a concentrate, and then blending the concentrate with a lubricating oil to obtain the final formulation. Such additive concentrates will typically contain (on an active ingredient (A.I.) basis) from about 3 to about 45 wt. %, and often from about 10 to about 35 wt. %, highly grafted, multi-functional olefin copolymer additive, and more often from about 40 to 60 wt %, base oil based on the concentrate weight.

The highly grafted, multi-functional olefin copolymer products useful in lubricating oils to lubricate cooled EGR engines of the present invention find their primary utility in lubricating oil compositions which employ a base oil in which the additives are dissolved or dispersed. Such base oils may be natural, synthetic or mixtures thereof. Base oils suitable for use in preparing the lubricating oil compositions of the present invention include those conventionally employed as crankcase lubricating oils for spark-ignited and compression-ignited internal combustion engines, such as automobile and truck engines, marine and railroad diesel engines, and the like.

In the preparation of lubricating oil formulations it is common practice to introduce the additives in the form of 10 to 80 wt. % active ingredient concentrates in hydrocarbon oil, e.g. mineral lubricating oil, or other suitable solvent. Usually these concentrates may be diluted with 3 to 100, e.g., 5 to 40, parts by weight of lubricating oil per part by weight of the additive package in forming finished lubricants, e.g. crankcase motor oils. The purpose of concentrates, of course, is to make the handling of the various materials less difficult and awkward as well as to facilitate solution or dispersion in the final blend. Thus, the highly grafted, multi-functional olefin copolymer dispersant VII would usually be employed in the form of a 10 to 50 wt. % concentrate, for example, in a lubricating oil fraction.

The amount of dispersant viscosity index improver in the lubricating oil in the cooled EGR engine can be from about 20 wt. % to about 18 wt. %.

The highly grafted, multi-functional olefin copolymer dispersant VIIs used in an oil to lubricate the cooled EGR engines of the present invention will generally be used in admixture with a lube oil basestock, comprising an oil of lubricating viscosity, including natural lubricating oils, synthetic lubricating oils and mixtures thereof. Natural oils include animal oils and vegetable oils (e.g., castor, lard oil), liquid petroleum oils and hydrorefined, solvent-treated or acid-treated mineral lubricating oils of the paraffinic, naphthenic and mixed paraffinic-naphthenic types. Oils of lubricating viscosity derived from coal or shale are also useful base oils. The synthetic lubricating oils used in this invention include one of any number of commonly used synthetic hydrocarbon oils, which include, but are not limited to, poly-alpha-olefins, alkylated aromatics, alkylene oxide polymers, interpolymers, copolymers and derivatives thereof where the terminal hydroxyl groups have been modified by esterification, etherification etc, esters of dicarboxylic acids and silicon-based oils.

The present invention is further directed to a method of improving fuel economy and fuel economy durability of a vehicle having a cooled EGR engine, wherein said method comprises adding to and operating in the crankcase of the vehicle the lubricating oil composition containing the olefin copolymer dispersant VII described herein.

Also provided is a method of simultaneously passing the M-11 EGR and T-10 tests (ASTM D4485 classification for C1-4 oils D02.B0 C1-4 Ballot) and the Mack T-11 test which are cooled EGR engines. Said method comprises adding to and operating in the crankcase of the vehicle the lubricating oil composition containing the olefin copolymer dispersant VII described above.

The highly grafted, multi-functional olefin copolymers used in the oils to lubricate the cooled EGR engines of the present invention may be post-treated so as to impart additional properties necessary or desired for a specific lubricant application. Post-treatment techniques are well known in the art and include boronation, phosphorylation, and maleination.

In another embodiment herein, the EGR engine is lubricated with a lubricating oil further comprising an additive selected from the group consisting of zinc dialkyl dithiophosphates, friction modifiers, antioxidants, defoamants, surfactants, corrosion inhibitors, extreme pressure agents, detergents, and pour point depressants.

Thus, in another embodiment an EGR engine is lubricated with an oil comprising a highly grafted, multi-functional olefin copolymer viscosity modifier, also called a viscosity index improver, comprising the reaction product of an acylated olefin copolymer and a polyamine, wherein the acylated olefin copolymer comprises an olefin copolymer having grafted thereon from 0.15 to 1.0 carboxylic groups per 1000 number average molecular weight units of olefin copolymer and wherein the olefin copolymer has a number average molecular weight of between 10,000 and 150,000.

In another important embodiment, the lubricated cooled EGR engine of the present invention can surprisingly pass the M-11 EGR crosshead wear and dispersancy test, the T-10 test, and the Mack T-11 test (EGR equipped diesel engines). Conventional lubricating oils containing certain known dispersants including Ethyl's HiTEC® 5772 dispersant and non-dispersant VIIs have not been able to pass all of these tests in cooled EGR engines. The dispersant VIIs disclosed herein as useful in lubricating oils in a cooled EGR engine can be used in conjunction with other dispersants. Table I shows HiTEC® 5777 alone, HiTEC® 5777 plus HiTEC® 5772, and HiTEC® 5772 alone; when used to lubricate a Cummins cooled EGR engine after 250 hours.

**Table I**

| 0.1 | wt.% H5777 | % Active | wt.% H5772 | % Active | Oil Viscosity |
|---|---|---|---|---|---|
| 1 | 5.0 | 1.41 | 0 | 0 | 25.04 |
| 2 | 4.5 | 1.27 | 4.0 | 0.76 | 27.03 |
| 3 | 3.1 | 0.87 | 3.7 | 0.70 | 33.28 |
| 4 | 0 | 0 | 5.35 | 1.01 | 66.73 |

The viscosities of the used 15W-40 oils were measured at 100° C. Table I clearly shows that HiTEC® 5777 dispersant controls the viscosity increase while the use of the dispersant viscosity modifier HiTEC® 5772 does not (higher viscosity of 66.73).

In yet another embodiment, the lubricated engine achieves a viscosity increase of less than 10 cSt at 100° C at a soot level of up to 6.0%m in the Mack T-11 test.

Another embodiment herein provides a lubricated EGR engine wherein the lubricating oil passes the Mack T-11 test at a viscosity increase of less than 8 cSt at 100° C at a soot level of up to 6.09%m in the Mack T-11 test.

Further provided herein is a lubricated EGR engine wherein the lubricating oil has a viscosity increase of less than 10 cSt at 100° C and up to 6.0%m soot in the Mack T-11 test.

It is known that hard soot particles cause abrasive wear on valve trains, rings, and liners. Thick lubricating oil films containing the olefin copolymer dispersant VIIs defined herein can significantly and surprisingly reduce this abrasive wear. Oils with good M-11 test performances formed thick boundary films providing percent film resistance values of 80 to about 95 after 2000 seconds in the High Frequency Reciprocating Rig (HFRR) test.

EGR tests results have shown soot thickening from the present embodiments superior to that seen in the T-8E test. Lubricating oils containing the olefin copolymer dispersant VII described herein have been successfully tested in cooled EGR engines from Cat, Mack, Cummins, Volvo, and Detroit Diesel. Thus another embodiment herein provides a use in an Internal Combustion engine, comprising a cooled exhaust gas recirculation system, of a lubricating oil comprising a base oil, and at least one olefin copolymer dispersant viscosity index improver in an amount sufficient to reduce the amount of soot-induced oil thickening of the lubricating oil.

Lubricating oil films containing the olefin copolymer dispersant VIIs defined herein provide excellent performance in the Mack T-11 test, reduce both high and low temperature thickening, give superior sludge performance, and give superior wear protection from soot.

In another embodiment, the present invention provides a method to extend the service time between oil drains in a vehicle equipped with an exhaust gas recirculation engine up to about 60,000 miles by the addition to a lubricating oil in the engine of an olefin copolymer dispersant VII as described herein.

The oils containing the olefin copolymer dispersant VII as taught herein also have the following advantages when used in cooled EGR engines: excellent for building film strength and reducing wear; low treat rate of, for example, 8.5% wt. (∼ 9.5% vol.) for 15W-40; strong sludge suppression performance; provides superior performance in EGR engines; good shear stability, permanent and HTHS; excellent dispersancy for soot handling and improved wear protection; allows for lower additive treat rate; and excellent used-oil low temperature viscosity properties, relative to the low temperature viscosity properties of oils not containing the olefin copolymer dispersant VII as taught herein.

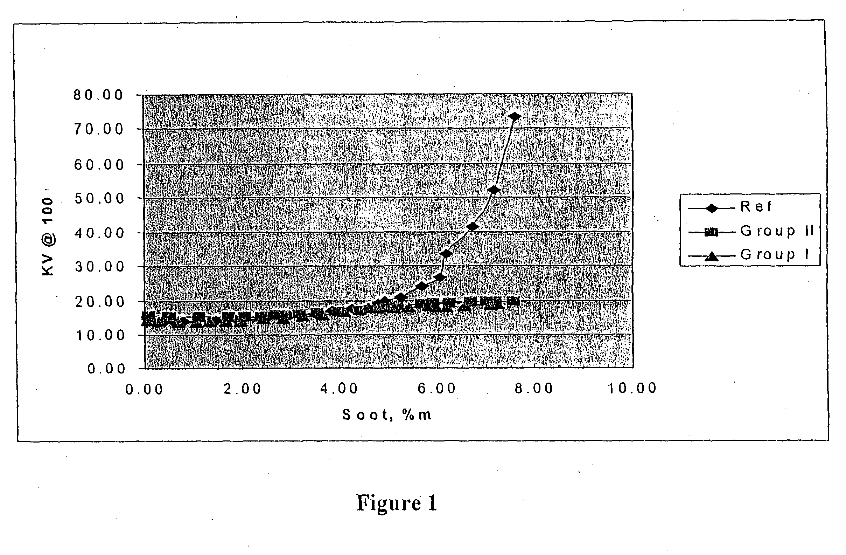

Figure 1 illustrates that by the use in the cooled EGR engine of a lubricating oil containing the olefin dispersant copolymer VII described herein, the oil exhibited a kinematic viscosity at 100° C that does not increase rapidly in high soot loading, whereas the kinematic viscosity of the industry standard reference oil increases rapidly beyond the 4% soot loading level. Figure 1 shows viscosities for lubricating oils using Group I and Group II base oils.

A particularly useful olefin copolymer dispersant VII for addition to a lubricating oil in a cooled EGR engine is HiTEC® 5777 Dispersant available from Ethyl Corporation, Richmond, Virginia.

The following examples further illustrate aspects of the present invention but do not limit the present invention.

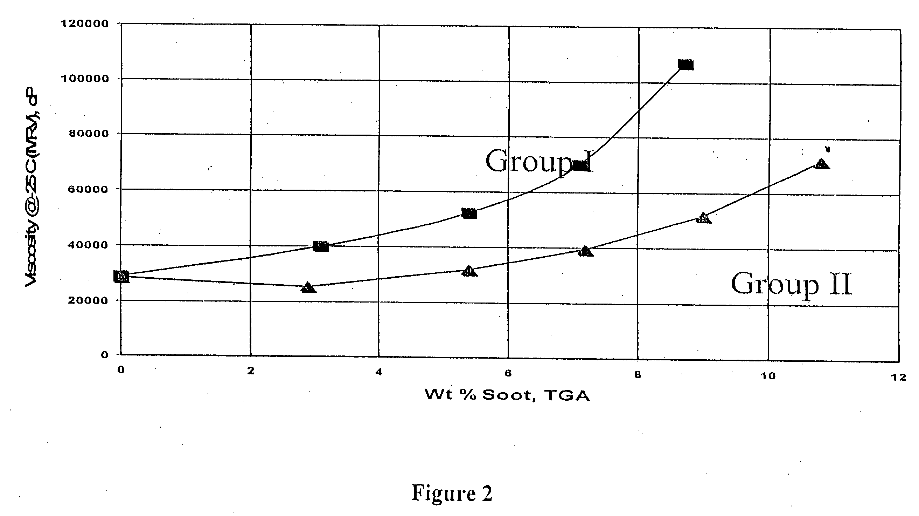

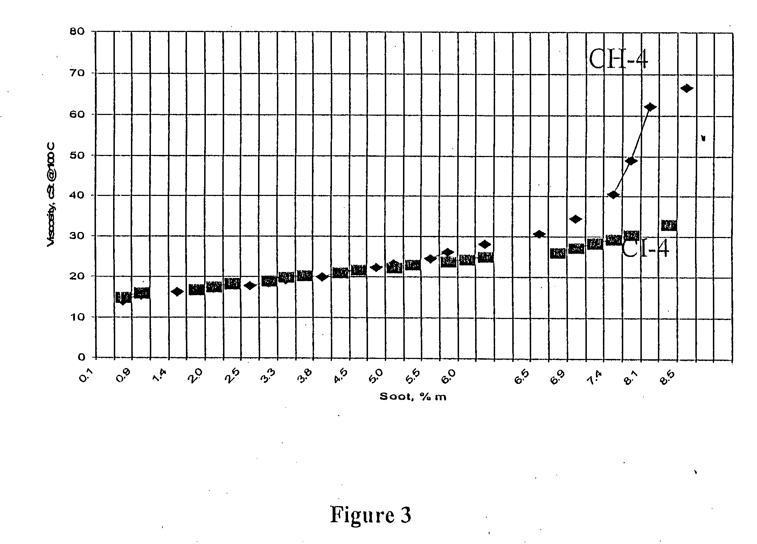

Figure 2 illustrates the effect on viscosity measured at 25° C of increasing weight percent of soot loading in a lubricating oil containing an olefin copolymer dispersant viscosity index improver, Ethyl's HiTEC® 5777 dispersant additive. The Figure shows a curve for Group I and for Group II base oils in this low temperature Mack T-8E test. In this illustration, the additive HiTEC® 5777 allowed the maintenance of low temperature viscosity below the 15W limit to a loading of over 6% soot in Group I base oil and to over 9% soot in Group II base oil.

Figure 3 illustrates the performance in a cooled EGR engine of a lubricating oil labeled C1-4 D1 containing HiTEC® 5777 versus a standard reference oil CH-4 in the common extended T-8E test for viscosity change caused by soot loading. It is clear that the use in a cooled EGR engine of the olefin copolymer dispersant VII described herein significantly restricted the viscosity increase at higher soot levels.

### EXAMPLES:

### Example I.

In an example of an embodiment herein, a cooled EGR engine was lubricated with an oil containing an olefin copolymer dispersant VII prepared as follows: An acylated ethylene-propylene copolymer was prepared by free radically grafting maleic anhydride, in the presence of a solvent, onto an ethylene-propylene copolymer backbone. The acylated ethylene-propylene copolymer had a number average molecular weight of approximately 40,000 as determined by gel permeation chromatography. The reaction conditions and molar proportions of maleic anhydride and ethylene-propylene copolymer were such that 7.2 molecules of maleic anhydride were grafted onto the olefin copolymer backbone. This is equivalent to 0.36 carboxylic groups per 1000 Mn of polymer backbone (i.e., 2x7.2 = 14.4 carboxylic groups/40,000 Mn = 0.36 carboxylic groups/1000 Mn) to form the acylated ethylene-propylene copolymer. The acylated ethylene-propylene copolymer was reacted with N-phenyl-1,4-phenylenediamine (NPPDA), in the presence of a surfactant, at 160°C for approximately six hours. The NPPDA was added in an amount sufficient to theoretically react with all of the grafted carboxylic groups.

### Example II.

In another example, a cooled EGR engine was lubricated with an oil containing an olefin copolymer dispersant VII prepared as follows: The highly grafted, multi-functional viscosity modifier of Example II was prepared in the same manner as that of Example I. However, a sufficient amount of maleic anhydride was added such that 14.2 molecules of maleic anhydride were grafted onto the olefin copolymer backbone. This is equivalent to 0.71 carboxylic groups per 1000 Mn of polymer backbone (i.e., 2x14.2 = 28.4 carboxylic groups/40,000 Mn = 0.71 carboxylic groups/1000 Mn) to form the acylated ethylene-propylene copolymer. The acylated ethylene-propylene copolymer was reacted with N-phenyl-1,4-phenylenediamine (NPPDA), in the presence of a surfactant, at 160°C for approximately six hours. The NPPDA was added in an amount sufficient to theoretically react with all of the grafted carboxylic groups.

It has been noted that the use of some dispersant polymers and copolymers in lubricating oils used in cooled EGR engines did not prevent severe oil thickening, unlike the olefin copolymer dispersant VII described herein when used in an oil to lubricate a cooled EGR engine.

In certain embodiments herein, the olefin copolymer dispersant VII can be present in the lubricating oil in the cooled EGR engine in an amount of from 2 weight percent to about 18 weight percent. Active material range from 0.55 to 10.0%m.

Other embodiments of the present invention will be apparent to those skilled in the art from consideration of the specification and practice of the invention disclosed herein. It is intended that the specification and examples be considered as exemplary only, with a true scope and spirit of the invention being indicated by the following claims. This invention is susceptible to considerable variation in its practice. Accordingly, this invention is not limited to the specific exemplifications set forth hereinabove. Rather, this invention is within the spirit and scope of the appended claims, including the equivalents thereof available as a matter of law.

The patentee does not intend to dedicate any disclosed embodiments to the public, and to the extent any disclosed modifications or alterations may not literally fall within the scope of the claims, they are considered to be part of the invention under the doctrine of equivalents.

Additional effects and uses of the olefin copolymer dispersant viscosity index improver include:
- reducing the amount of soot-induced oil thickening of the lubricating oil in cooled EGR internal combustion engines
- improving fuel economy of a vehicle equipped with a cooled EGR engine
- improving fuel economy durability of a vehicle equipped with a cooled EGR engine
- allowing a single lubricant composition to pass all of the M-11 EGR test, T-10 test (ASTM D4485 classification for AP1 C1-4 oils), and the Mack T-11 in cooled EGR engine
- superior oil sludge performance in cooled EGR engines
- superior wear protection from soot in a vehicle equipped with a cooled EGR engine.

In the above improvements or reductions, especially superior oil sludge and wear protection from soot, are to be judged by reference to a lubricant oil lacking the olefin copolymer dispersant viscosity index improver used in a similar cooled EGR engine.

## Claims

1. A lubricated engine comprising an exhaust gas recirculation system, whereby exhaust gases comprising soot generated in the combustion in the engine of fuel contact a lubricating oil used to lubricate said engine, wherein said lubricating oil comprises: a base oil, and at least one dispersant viscosity index improver in an amount sufficient to reduce the amount of oil thickening of the lubricating oil.

2. The engine of claim 1, wherein the lubricating oil further comprises an additive selected from the group consisting of zinc dialkyl dithiophosphates, friction modifiers, corrosion inhibitors, extreme pressure agents, antioxidants, defoamants, surfactants, detergents, and pour point depressants.

3. The engine of claim 1 or claim 2, wherein the base oil of the lubricating oil is selected from the group consisting of natural lubricating oils, synthetic lubricating oils, and mixtures thereof.

4. The engine of claim 3, wherein the base oil of the lubricating oil is selected from the group consisting of animal oils, vegetable oils, castor oil, lard oil, liquid petroleum oils, hydrorefined, solvent-treated or acid-treated mineral lubricating oils of the paraffinic, naphthenic and mixed paraffinic-naphthenic types, oils of lubricating viscosity derived from coal or shale, poly-alpha-olefins, alkylated aromatics, alkylene oxide polymers, interpolymers, copolymers and derivatives thereof where the terminal hydroxyl groups have been modified by esterification or etherification, esters of dicarboxylic acids, and silicon oils.

5. The engine of any one of claims 1 to 4 wherein the at least one dispersant viscosity index improver in the lubricating oil comprises an olefin copolymer dispersant viscosity index improver.

6. The engine of any one of claims 1 to 4 wherein the at least one dispersant viscosity index improver in the lubricating oil is selected from polymethacrylates, ethylene/propylene copolymers, polyisoprene or saturated polyisoprene, and polyisoprene/saturated polyisoprene copolymers.

7. The engine of any one of claims 1 to 6 wherein the at least one dispersant viscosity index improver in the lubricating oil is a highly grafted, multi-functional olefin copolymer that comprises the reaction product of (1) an acylated olefin copolymer, wherein the acylated copolymer comprises copolymers or terpolymers of ethylene and C₃ to C₂₃ alpha-olefin and optionally a non-conjugated diene or triene on which has been grafted ethylenically unsaturated carboxylic reactants to a level of 0.3 to 0.75 carboxylic groups per 1000 number average molecular weight units (Mn), and (2) a polyamine compound.

8. The engine of claim 7 wherein the polyamine compound is selected from
(a) N-arylphenylenediamines of formula: 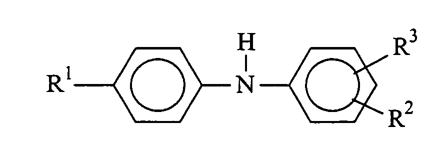 in which R¹ is hydrogen, -NH-aryl, -NH-arylalkyl, -NH-alkyl, or a branched or straight chain radical having from 4 to 24 carbon atoms that can be alkyl, alkenyl, alkoxyl, aralkyl, alkaryl, hydroxyalkyl or aminoalkyl; R² is -NH₂, CH₂-(CH₂)ₙ-NH₂, CH₂-aryl-NH₂, in which n has a value from 1 to 10; and R³ is hydrogen, alkyl, alkenyl, alkoxyl, aralkyl, alkaryl having from 4 to 24 carbon atoms;
(b) aminothiazoles selected from aminothiazole, aminobenzothiazole, aminobenzo-thiadiazole and aminoalkylthiazole;
(c) aminocarbazoles of formula: 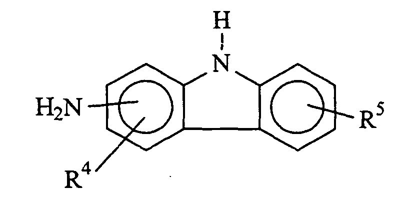 in which R⁴ and R⁵ are the same or different and each is hydrogen or an alkyl, alkenyl or alkoxyl radical having from 1 to 14 carbon atoms;
(d) aminoindoles of formula: 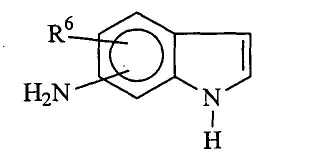 in which R⁶ is hydrogen or an alkyl radical having from 1 to 14 carbon atoms;
(e) aminopyrroles of formula: 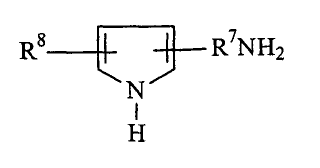 in which R⁷ is a divalent alkylene radical having 2-6 carbon atoms and R⁸ is hydrogen or an alkyl radical having from 1 to 14 carbon atoms;
(f) amino-indazolinones of formula: 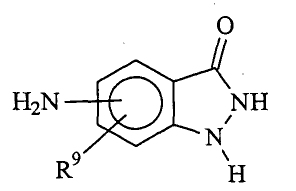 in which R⁹ is hydrogen or an alkyl radical having from 1 to 14 carbon atoms;
(g) aminomercaptotriazoles of formula: 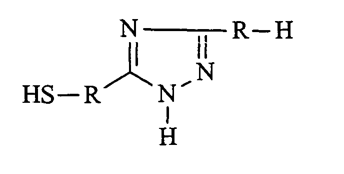 in which each R is a single bond or a C₁-C₁₀ linear or branched divalent hydrocarbon selected from alkylene, alkenylene, arylalkylene or arylene;
(h) aminoperimidines of formula, 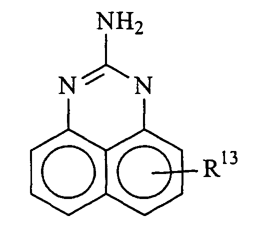 in which R¹³ is hydrogen or an alkyl or alkoxy radical having from 1 to 14 carbon atoms;
(i) aminoalkyl imidazoles; and
(j) aminoalkyl morpholines.

9. The lubricated engine of any one of claims 1 to 8 wherein the amount of the dispersant viscosity improver in the lubricating oil is from 2 weight percent to about 18 weight percent.

10. The engine of any one of claims 1 to 8 wherein the engine is selected from automotive engines, heavy and light duty truck engines, gasoline combustion engines, diesel engines, hybrid Internal Combustion/electric engines.

11. The engine of any one of claims 1 to 10 wherein the engine is cooled by the circulation of a material selected from water, a water/hydrocarbon mix, water/glycol mix, air, and gas.

12. The engine of claim 1, wherein said lubricating oil achieves a viscosity increase of less than 10cSt at 100°C at a soot level of up to 6.0%m in the Mack T-11 test.

13. The lubricated engine of claim 1, wherein the lubricating oil passes the Mack T-11 test at a viscosity increase of less than 8 cSt at 100°C at a soot level of up to 6.09%m in the Mack T-11 test.
